# EUROPEAN PATENT SPECIFICATION

(11) **EP 3 253 265 B1**
(45) Date of publication and mention of the grant of the patent: **05.12.2018**
(21) Application number: 16712474.2
(22) Date of filing: 03.02.2016
(51) Int. Cl.: A47J 31/46

(54) **MACHINE FOR PREPARING BEVERAGES, IN PARTICULAR ESPRESSO COFFEE, AND VALVE ASSEMBLY USABLE IN SUCH A MACHINE**
MASCHINE ZUR ZUBEREITUNG VON GETRÄNKEN, INSBESONDERE ESPRESSOKAFFEE, UND IN SOLCH EINER MASCHINE VERWENDBARE VENTILANORDNUNG
MACHINE DE PRÉPARATION DE BOISSONS, EN PARTICULIER DE CAFÉ EXPRESSO, ET ENSEMBLE SOUPAPE POUVANT ÊTRE UTILISÉ DANS UNE TELLE MACHINE

(30) Priority: 04.02.2015 IT TO20150079
(43) Date of publication of application: 13.12.2017
(73) Proprietor: Luigi Lavazza S.p.A., 10152 Torino (IT)
(72) Inventor: ROTTA, Denis, 10144 Torino (IT); COLONNA, Andrea, 10129 Torino (IT); PICONE, Gabriele, 10149 Torino (IT)
(74) Representative: Rondano, Davide
(86) International application number: PCT/IB2016/050540
(87) International publication number: WO 2016/125085

(56) References cited:
- EP-A1- 2 397 054
- WO-A1-02/058523
- WO-A1-2006/033049
- CN-A- 102 599 819
- CN-U- 201 719 074

## Description

This invention relates to a machine for preparing beverages, in particular espresso coffee. More specifically, the invention relates to a machine having a hydraulic circuit including
a brewing assembly,
a water tank, a pump having an inlet connected to said tank and an outlet connected to the brewing assembly,
a normally closed, one-way, hydraulic valve interposed between the pump and the brewing assembly to allow a flow of water to the brewing assembly when the pressure of the water outputted from the pump exceeds a predetermined threshold,
electric heating means for heating the water outputted by the pump, and
a normally open discharge valve having an inlet connected between the one-way hydraulic valve and the brewing assembly, and designed to adopt an open condition and a closed condition, in which it allows and prevents, respectively, a flow of fluid from the brewing assembly towards a discharge environment.

A machine of this type is described in Italian patent application TO2014A001002, filed on 18 December 2014, and in WO 02/058523 A1.

The document CN 201719074 U discloses a two position valve with differential hydraulic driving.

In this existing machine, the discharge valve is a normally open two-way, two-position solenoid valve. When in operation, once the beverage has been dispensed, the hydraulic circuit of the machine is emptied through said solenoid valve, which is excited by the control unit of the machine and opens a discharge passage that enables the pressurized water between the brewing assembly and the one-way valve to flow into a collecting recipient, such as a drip tray.

The known solution described above works very well, but is somewhat expensive because the discharge valve is a solenoid valve, which has to be connected to the control unit of the machine by means of a suitable electrical control line.

The cost of the solenoid for controlling a hydraulic plug depends on the quality of the copper required to make same, which in turn depends on the intensity of the force same is required to supply. To reduce the cost of this component, it is known to reduce the hydraulic shapes inside the valve, but this has the drawback of potential fouling and blocking of the valve during the service life of same.

One object of the present invention is to make such a machine for preparing beverages that is cheap and incorporates simplified electrical wiring.

This and other objects are achieved according to the invention with a machine of the type specified above, characterized in that the discharge valve is a three-way, two-position valve with differential hydraulic control, having a main inlet coupled with said hydraulic circuit between the one-way valve and the brewing assembly, first and second control inlets connected between the outlet of the pump and said one-way valve and, respectively, between the one-way valve and the brewing assembly and an outlet communicating with said discharge environment;
the arrangement being such that after the pump is activated for preparing a beverage, the discharge valve switches from the open condition to the closed condition before said one-way valve opens, and when the pump is deactivated after the beverage has been dispensed, the discharge valve switches back to the open condition.

In one embodiment, the one-way valve and the discharge valve are suitably built into a single three-way valve assembly.

In particular, the one-way valve may be suitably built into the hydraulic-control discharge valve.

Further characteristics and advantages of the invention are set out in the detailed description below, provided purely as a non limiting example, with reference to the attached drawings, in which:
- Figure 1 is a schematic view of a machine for preparing beverages according to the prior art,
- Figure 2 is a schematic view of a machine for preparing beverages according to the present invention,
- Figure 3 is an axial cross section of a hydraulic-control discharge valve useable in accordance with the present invention,
- Figure 4 is a schematic view of an alternative embodiment of a machine for preparing beverages according to the invention, and
- Figure 5 is an axial cross section of an embodiment of an integrated valve assembly useable in a machine according to the present invention.

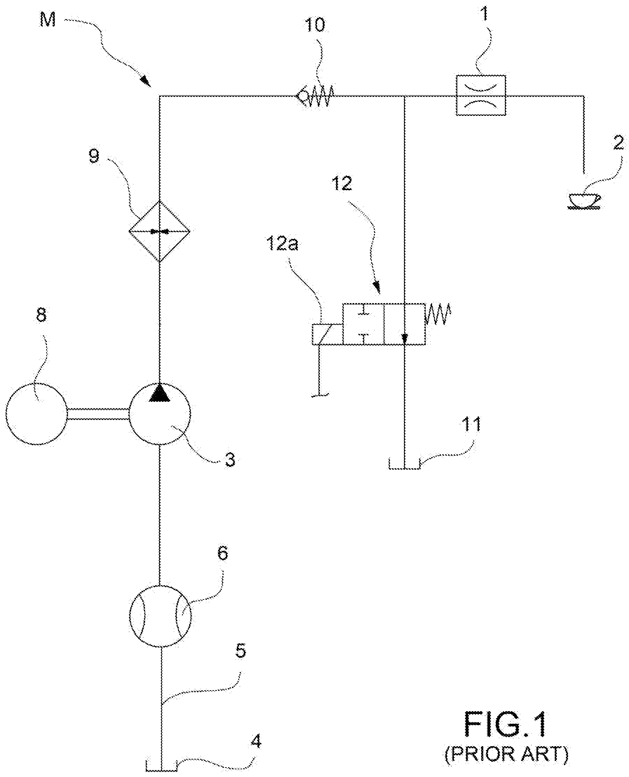

In Figure 1, reference sign M is used to indicate, as a whole, a machine for preparing beverages according to the prior art. Said machine M includes a hydraulic circuit including a brewing assembly 1 that is hydraulically substantially equivalent to a choke for dispensing a beverage into a collecting container 2, such as a cup.

An electric pump 3 has an inlet connected to a water tank 4 via an aspiration pipe 5 which may be fitted with a flow meter 6, for example a turbine flow meter, to provide electrical signals (pulses) indicating the flow rate of the water aspirated by the pump.

The pump 3 may be a vibrating electric pump or a pump driven by an electric motor 8 of a known type.

The pressurized water outputted by the pump 3 then reaches an electric heating device or boiler 9, and therefrom continues towards the brewing assembly 1.

A one-way hydraulic valve 10 designed to enable water to flow towards said brewing assembly when the pressure of the water coming from the pump 3 exceeds a predetermined threshold value, such as 2 bar, is positioned between the heating device 9 and the brewing assembly 1.

Reference sign 12 is used to indicate a discharge valve, in the form of a two-way, two-position solenoid valve, with the inlet connected between the outlet of the one-way valve 10 and the inlet of the brewing assembly 1, and the outlet connected to a drainage recipient 11, such as the drip tray or box usually supplied with a coffee machine.

In the machine according to the prior art described above, the discharge solenoid valve 12 is a somewhat costly component. Said valve includes an excitation solenoid 12a that has to be connected to a control unit (not shown) of the machine M using a suitable electrical line.

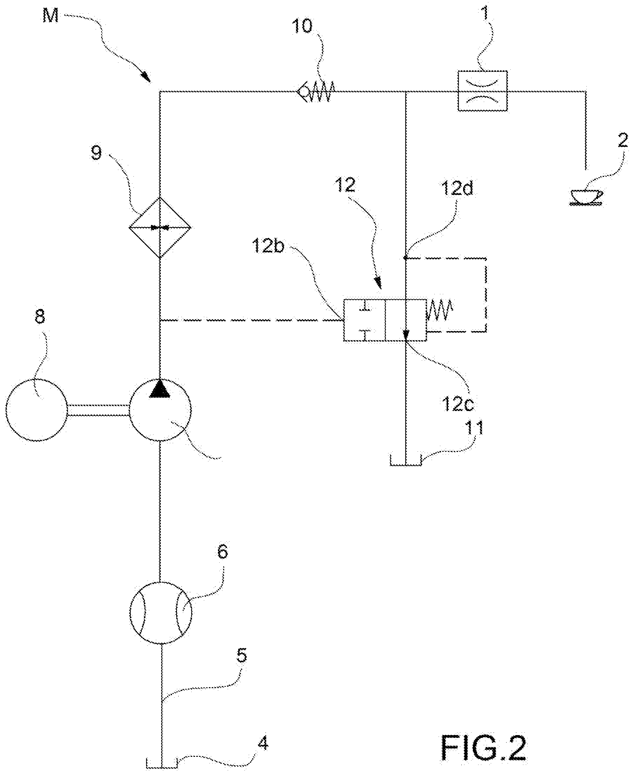

A substantial saving can be made with a solution according to the present invention, a first embodiment of which is described below with reference to Figure 2. The parts and elements in said figure that have already been described are indicated using the same reference signs as used previously.

In the machine M according to Figure 2, the discharge valve 12 is a three-way, two-position valve with differential hydraulic control. Said valve 12 has a main inlet 12a connected to the hydraulic circuit of the machine M between the one-way valve 10 and the brewing assembly 1, a first control inlet 12b connected between the outlet of the pump 3 and the one-way valve 10 and an outlet 12c communicating with the drainage or discharge recipient 11. As described more clearly below, when in operation, the main inlet 12a can also act as a second control inlet 12d.

The arrangement is such that, once the pump 3 has been activated to prepare a beverage, the hydraulic-control discharge valve 12 switches from the open condition to the closed condition before the one-way valve 10 opens.

The discharge valve 12 works on the basis of control by pressure difference. This was developed on the basis of experimental observations of the ratio between the pressure in the outlet branch of the pump and the pressure in the brewing chamber: this ratio differs substantially between operational and non-operational conditions. It has also been observed that said ratio does not however vary significantly while beverages are being dispensed and therefore remains approximately unchanged as the back pressure exerted by the precursors of said beverages varies.

Once the beverage has been dispensed, the pump 3 is deactivated and the discharge valve 12 switches back to the open condition.

The hydraulic-control valve 12 has a simplified structure, and requires neither a solenoid nor a dedicated electrical line to be controlled.

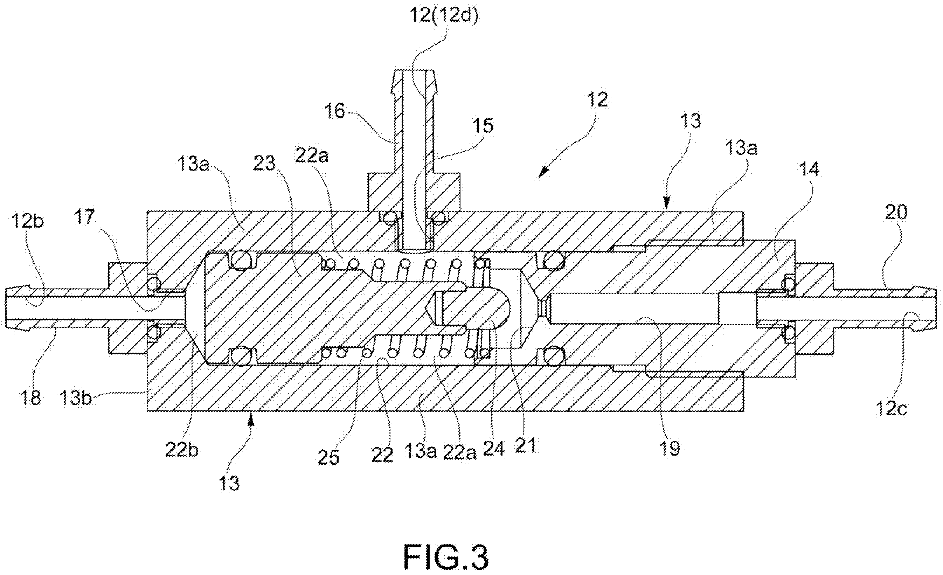

Figure 3 shows an embodiment of the hydraulic-control discharge valve 12 useable in the machine M in Figure 2.

The valve 12 according to Figure 3 includes a hollow body that, in the example embodiment shown, is formed by two elements 13 and 14 that are joined together using a threaded coupling.

The element 13 has an essentially tubular wall 13a, one extremity of which is screwed to the element 14. At the opposite extremity, the tubular wall 13a is connected to a transverse end wall 13b.

There is an opening 15 in the intermediate portion of the tubular wall 13a, into which an inlet connection 16 is fitted in a fluid-tight manner, the central passage of same being the main inlet 12a and the second control inlet 12d of the valve 12.

There is a through hole 17 in the central portion of the end wall 13b, into which a connection 18 is fitted in a fluid-tight manner, the central passage of same being the first control inlet 12b of the valve 12.

The element 14 has an axial central passage 19, and a connection 20 is fitted to one extremity of same in a fluid-tight manner, the central passage of which is the outlet 12c of the discharge valve.

A valve seat 21 is formed in the element 14 at the extremity of the passage 19 opposite the connection 20.

There is a chamber, indicated as a whole with reference sign 22, between the elements 13 and 14. A piston 23 is mounted axially moveably and in a fluid-tight manner inside said chamber, dividing same into two chamber portions 22a and 22b, same being sealingly separated from one another and in communication with the main and control inlet 12a, 12d and, respectively, with the control inlet 12b.

In the portion oriented towards the element 14, the piston 23 bears a plug 24 designed to cooperate with the valve seat 21 to control communication between the main inlet 12a and the outlet 12c.

A helical spring 25 is arranged in the portion 22a of the chamber 22, between the piston 23 and the element 14 of the body of the discharge valve. This spring 25 acts on the piston 23, tending to move said piston and the plug 24 away from the valve seat 21.

As indicated above, the discharge valve 12 is normally open, i.e. it normally adopts the arrangement shown in Figure 3, in which the plug 24 is removed from the valve seat 21 and consequently the main inlet 12a is in communication with the outlet 12c.

Once the pump 3 has been activated, to prepare a beverage, pressurized water reaches the control inlet 12b of the discharge valve 12, causing the piston 23 to move towards the element 14 of the body of the discharge valve 12. This is possible because the intervention pressure required to move the piston 23 is less than the threshold pressure of the one-way hydraulic valve 10, which is for example 1.5 bar. The plug 24 then closes the valve seat 21, disconnecting the main inlet 12a from the outlet 12c, before the one-way valve 10 opens.

The sequential closure of the discharge valve 12 followed by the one-way valve 10 can be ensured by properly dimensioning the spring 25 of the discharge valve.

Once the discharge valve 12 has been closed and the one-way valve 10 has been opened, the water flow generated by the pump 3 and heated by the device 9 reaches the brewing assembly 1, in which a quantity of a substance used to prepare the beverage has been placed in a known manner, potentially pre-packaged in a capsule or similar. The beverage is then gradually dispensed into the collecting recipient 2.

Once the beverage has been dispensed and the pump 3 has been deactivated, the one-way valve 10 remains open, enabling the hydraulic circuit to be emptied upstream of same, and the beverage continues to flow from the brewing assembly 1 towards the cup 2. The pressures in the chambers 22b and 22a of the discharge valve 12 (upstream and downstream of the one-way valve 10) fall until the pressure of the spring 25 combined with the pressure in the chamber 22 matches the pressure in the chamber 22b, enabling the valve to reopen. This operating mode is typical of a differential-pressure control valve.

Once opening has been completed, the plug 4 is no longer in contact with the seat 21, and the water contained in the hydraulic circuit of the machine between the brewing assembly 1 and the one-way valve 10 can then be discharged through the differential valve 12 into the drain or drip tray 11.

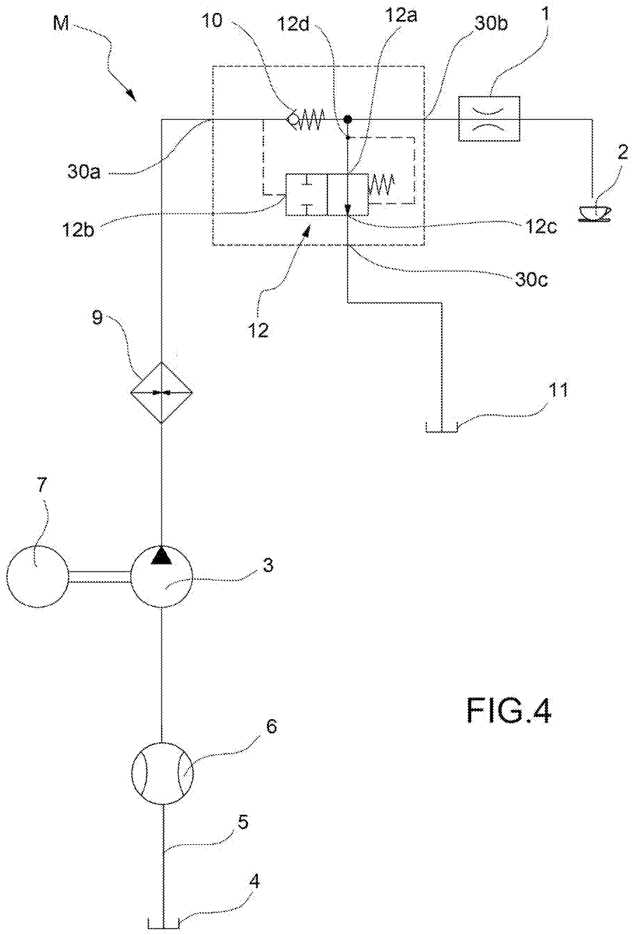

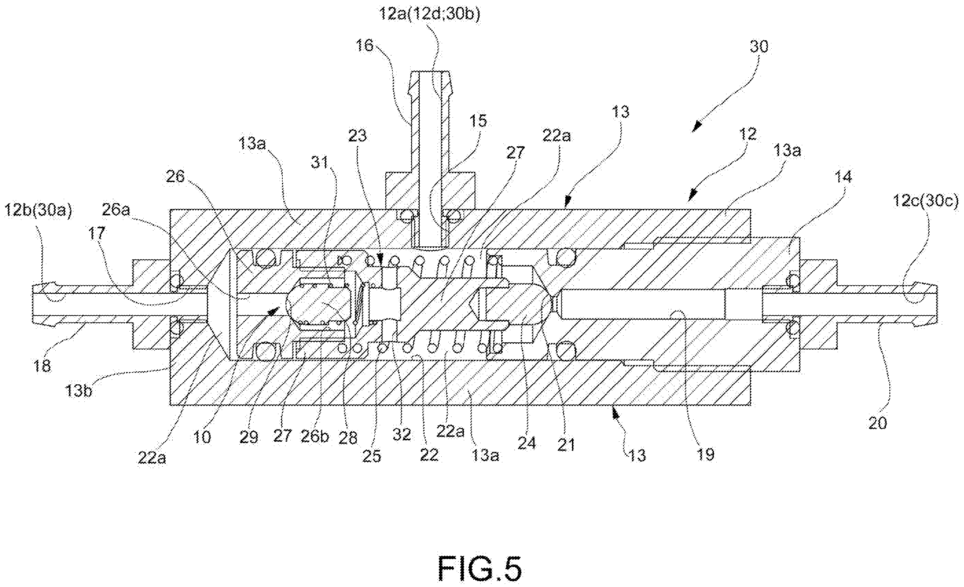

Advantageously, as shown schematically in Figure 4, the one-way valve 10 and the hydraulic-control discharge valve 12 can be built into a single valve assembly, indicated using reference sign 30 in Figures 4 and 5. The parts and elements in said figures that have already been described are indicated using the same reference signs as used previously.

With reference to Figure 4, the valve assembly 30 has an inlet 30a that is connected externally to the hydraulic circuit of the machine M between the outlet of the pump 3 and the brewing assembly 1, communicating inside said assembly with the inlet of the one-way valve 10 and with the control inlet 12b of the discharge valve 12. The valve assembly 30 also has an inlet/outlet 30b connected externally to the brewing assembly 1, and communicating internally with the outlet of the one-way valve 10 and with the main and control inlet 12a, 12d of the discharge valve 12.

Finally, the valve assembly 30 has an outlet 30c that communicates with the discharge recipient 11 and that, inside said assembly 30, communicates with the outlet 12c of the discharge valve 12.

Figure 5 shows an embodiment of the valve assembly 30 shown schematically in Figure 4. In said embodiment, the one-way valve 10 is in fact built into the discharge valve 12.

In the embodiment shown in Figure 5, the piston 23 is formed by two hollow bodies 26 and 27, which are joined together, for example by means of a threaded coupling.

An axial passage 26a is formed in the body 26, which is oriented towards the control inlet 12b of the discharge valve 12 or the inlet 30a of the valve assembly 30, said axial passage 26a being in communication with said inlet 12b (30a) and being able to be brought into communication with an adjacent cavity 26b controlled by a plug 28 cooperating with an associated seat 29 formed between the passage 26a and the cavity 26b.

The plug 28 is associated with a helical spring 31 that tends to press same towards the seat 29.

The plug 28, the related seat 29 and the spring 31 together form the one-way valve indicated using reference sign 10 in Figure 4.

The cavity 26b communicates permanently with the portion 22a of the chamber 22 through one or more passages 32 formed in the body 27.

The operating mode of the valve assembly 30 in Figure 5 can be immediately understood from the above description.

The valve assembly 30 in Figure 5 is shown in the condition in which the discharge valve 12 (21, 24) has already been closed, but the non-return valve 10 has not yet been opened, this phase immediately preceding the triggering of the flow of pressurized hot water to the brewing assembly 1 of the machine.

In the embodiments shown in Figures 4 and 5, the valve assembly 30 makes it possible to significantly simplify the necessary hydraulic connections.

Naturally, notwithstanding the principle of the invention, the means of implementation and the specific embodiments may vary greatly from that described and illustrated purely by way of a non-limiting example, without thereby moving outside the scope of the invention as defined in the attached claims.

## Claims

1. Machine (M) for preparing beverages, in particular espresso coffee, comprising a hydraulic circuit including
a brewing assembly (1),
a water tank (4),
a pump (3) having an inlet connected to said tank (4) and the outlet coupled with the brewing assembly (1),
a normally closed, one-way hydraulic valve (10) interposed between the pump (3) and the brewing assembly (1) to allow a flow of water to the brewing assembly (1) when the pressure of the water outputted from the pump (3) exceeds a predetermined threshold,
heating means (9) for heating the water outputted by the pump (3), and
a normally open discharge valve (12) having an inlet (12a) connected between said one-way hydraulic valve (10) and the brewing assembly (1), designed to adopt an open condition and a closed condition, in which it allows and prevents, respectively, a flow of fluid from said inlet (12a) towards a discharge environment (11);
the machine (M) being **characterized in that**
the discharge valve (12) is a three-way, two-position valve with differential hydraulic control, having a main inlet (12a) coupled with said hydraulic circuit between the one-way hydraulic valve (10) and the brewing assembly (1), first and second control inlets (12b; 12d, 12a) connected between the outlet of the pump (3) and the one-way hydraulic valve (10) and, respectively, between the one-way hydraulic valve (10) and the brewing assembly (1), and an outlet (12c) communicating with said discharge environment (11);
the arrangement being such that after the pump (3) is activated for preparing the beverage, the discharge valve (12) switches from the open condition to the closed condition before the one-way hydraulic valve (10) opens, and after the pump (3) is deactivated when the beverage has been dispensed, the discharge valve (12) switches back to the open condition.

2. Machine according to Claim 1, wherein said one-way hydraulic valve (10) and the discharge valve (12) are integrated in a single three-way valve assembly (30) having
an inlet (30a) connected externally to said hydraulic circuit, between the outlet of the pump (3) and the brewing assembly (1), and communicating internally with the inlet of the one-way valve hydraulic (10) as well as with the first control inlet (12b) of the discharge valve (12),
an inlet/outlet (30b) connected externally to the brewing assembly (1), and communicating internally with the outlet of the one-way hydraulic valve (10) and the main inlet (12a) of the discharge valve (12), and
an outlet (30c) communicating with said discharge environment (11).

3. Machine according to Claim 1 or Claim 2, wherein the discharge valve (12) comprises a hollow body (13, 14) in which there are provided said main inlet (12a; 15, 16), the first control inlet (12b; 17, 18) and the outlet (12c; 20), and in which there is defined a chamber (22) communicating with the main inlet (12a; 15, 16) and the first control inlet (12b; 17, 18) and which is able to communicate with the outlet (12c; 20) through a valve seat (21);
between the control inlet (12b; 17, 18) and the main inlet (12a; 15, 16) in said chamber (22) there being movably mounted, in a liquid-tight manner, a piston (23) carrying a plug (24) adapted to cooperate with said valve seat (21) for controlling the communication between the main inlet (12a; 15, 16) and the outlet (12c; 20); said piston (23) having associated resilient means (25) tending to displace the plug (24) away from said valve seat (21).

4. Machine according to Claims 2 and 3, wherein said one-way hydraulic valve (10) is built into the discharge valve (12).

5. Machine according to Claim 4, wherein in said piston (23; 26, 27) there is defined a cavity (26b) communicating permanently with the main inlet (12a; 15, 16) of the discharge valve (12) and in which there is defined a further valve seat (29) through which said cavity (26b) can communicate with the control inlet (12b; 17, 18) of the discharge valve (12); in said cavity (26b) there being movably mounted a further plug (28) cooperating with said further valve seat (29) for controlling the communication between the first control inlet (12b) and the main inlet (12a) which in operation can perform the function of said inlet/outlet (30b) and second control inlet (12d); said further plug (28) being associated with further resilient means (31) tending to keep it in engagement against said further valve seat (29).

## Patentansprüche

1. Maschine (M) zur Zubereitung von Getränken, insbesondere von Espressokaffee, aufweisend einen Hydraulikkreislauf umfassend
eine Brühvorrichtung (1),
einen Wasserspeicher (4),
eine Pumpe (3) mit einem mit dem Speicher (4) verbundenen Einlass und einem mit der Brühvorrichtung (1) verbundenen Auslass,
ein normalerweise geschlossenes Einweg-Hydraulikventil (10), das zwischen der Pumpe (3) und der Brühvorrichtung (1) angeordnet ist, um zu ermöglichen, dass Wasser zu der Brühvorrichtung (1) strömt, wenn der Druck des von der Pumpe (3) ausgegebenen Wassers einen vorbestimmten Grenzwert überschreitet,
Heizmittel (9) zum Erhitzen des von der Pumpe (3) ausgegebenen Wassers, und ein normalerweise offenes Auslassventil (12) mit einem Einlass (12a), der zwischen dem Einweg-Hydraulikventil (10) und der Brühvorrichtung (1) angeordnet und mit diesen verbunden ist, welcher so ausgelegt ist, dass er einen offenen und einen geschlossenen Zustand einnehmen kann, in welchem er einen Flüssigkeitsstrom von dem Einlass (12a) in Richtung einer Abgabeumgebung (11) zulässt bzw. unterbindet;
wobei die Maschine (M) **dadurch gekennzeichnet ist, dass**
das Auslassventil (12) ein Dreiwege-Zweistellungsventil mit differentieller hydraulischer Steuerung ist, mit einem Haupteinlass (12a), der zwischen dem Einweg-Hydraulikventil (10) und der Brühvorrichtung (1) mit dem Hydraulikkreislauf gekoppelt ist, ersten und zweiten Steuereinlässen (12b; 12d, 12a), die zwischen dem Auslass der Pumpe (3) und dem Einweg-Hydraulikventil (10) beziehungsweise zwischen dem Einweg-Hydraulikventil (10) und der Brühvorrichtung (1) angeschlossen sind, und mit einem Auslass (12c), der mit der Abgabeumgebung (11) in Kommunikation steht;
wobei die Anordnung derart ist, dass das Auslassventil (12) nach Aktivierung der Pumpe (3) zum Zubereiten des Getränks vom offenen Zustand in den geschlossenen Zustand schaltet, bevor sich das Einweg-Hydraulikventil (10) öffnet, und dass das Auslassventil (12) nach Deaktivierung der Pumpe (3) nach Ausgabe des Getränks in den offenen Zustand zurückschaltet.

2. Maschine nach Anspruch 1, wobei das Einweg-Hydraulikventil (10) und das Auslassventil (12) in eine einzige Dreiwegeventilanordnung (30) integriert sind, mit
einem Einlass (30a), der zwischen dem Auslass der Pumpe (3) und der Brühvorrichtung (1) extern an den Hydraulikkreislauf angeschlossen ist und der intern mit dem Einlass des Einweg-Hydraulikventils (10) sowie mit dem ersten Steuereinlass (12b) des Auslassventils (12) in Kommunikation steht,
einem Einlass / Auslass (30b), der extern an die Brühvorrichtung (1) angeschlossen ist und der intern mit dem Auslass des Einweg-Hydraulikventils (10) und dem Haupteinlass (12a) des Auslassventils (12) in Verbindung steht, und
einem Auslass (30c), der mit der Ausgabeumgebung (11) in Verbindung steht.

3. Maschine nach Anspruch 1 oder Anspruch 2, wobei das Auslassventil (12) einen Hohlkörper (13, 14) aufweist, in welchem der Haupteinlass (12a; 15, 16), der erste Steuereinlass (12b, 17, 18) und der Auslass (12c; 20) vorgesehen sind und in welchem eine Kammer (22) festgelegt ist, welche mit dem Haupteinlass (12a; 15, 16) und dem ersten Steuereinlass (12b; 17, 18) kommuniziert und welche dazu in der Lage ist, durch einen Ventilsitz (21) mit dem Auslass (12c; 20) in Kommunikation zu stehen;
wobei zwischen dem Steuereinlass (12b; 17, 18) und dem Haupteinlass (12a, 15, 16) ein einen Kegel (24) tragender Kolben (23) in der Kammer (22) beweglich und in einer wasserfesten Weise gelagert ist, wobei der Kegel dazu ausgelegt ist, mit dem Ventilsitz (21) zum Kontrollieren der Kommunikation zwischen dem Haupteinlass (12a; 15, 16) und dem Auslass (12c; 20) zusammenzuwirken; wobei der Kolben (23) mit zugehörigen elastischen Mitteln versehen ist, die dazu neigen, den Kegel (24) vom Ventilsitz (21) weg zu verschieben.

4. Maschine nach Anspruch 2 und 3, wobei das Einweg-Hydraulikventil (10) in das Auslassventil (12) eingebaut ist.

5. Maschine nach Anspruch 4, wobei in dem Kolben (23; 26, 27) ein Hohlraum (26b) ausgebildet ist, der in ständiger Verbindung mit dem Haupteinlass (12a; 15, 16) des Auslassventils (12) steht und in welchem ein weiterer Ventilsitz (29) ausgebildet ist, durch welchen der Hohlraum (26b) mit dem Steuereinlass (12b; 17, 18) des Auslassventils (12) in Kommunikation stehen kann; wobei in dem Hohlraum (26b) ein weiterer Kegel (28) beweglich gelagert ist, welcher mit dem weiteren Ventilsitz (2) in Kommunikation steht, um die Kommunikation zwischen dem ersten Steuereinlass (12b) und dem Haupteinlass (12a) zu kontrollieren, welcher im Betrieb die Funktion des Einlasses / Auslasses (30b) und des zweiten Steuereinlasses (12d) übernehmen kann; wobei der weitere Kegel (28) mit weiteren elastischen Mitteln (31) verbunden ist, die dazu neigen, ihn mit dem weiteren Ventilsitz (29) in Eingriff zu halten.

## Revendications

1. Machine (M) de préparation de boissons, en particulier de café expresso, comprenant un circuit hydraulique comportant
un ensemble percolateur (1),
un réservoir à eau (4),
une pompe (3) ayant une entrée connectée audit réservoir (4) et dont la sortie est couplée à l'ensemble percolateur (1),
une soupape hydraulique unidirectionnelle (10) normalement fermée intercalée entre la pompe (3) et l'ensemble percolateur (1) pour autoriser un écoulement d'eau vers l'ensemble percolateur (1) lorsque la pression de l'eau délivrée par la pompe (3) dépasse un seuil prédéterminé,
des moyens de chauffage (9) pour chauffer l'eau délivrée par la pompe (3), et
une soupape de refoulement (12) normalement ouverte ayant une entrée (12a) connectée entre ladite soupape hydraulique unidirectionnelle (10) et l'ensemble percolateur (1), et conçue pour adopter un état ouvert et un état fermé dans lesquels elle autorise et empêche, respectivement, un écoulement de liquide de ladite entrée (12a) vers un milieu de refoulement (11) ;
la machine (M) étant **caractérisée en ce que**
la soupape de refoulement (12) est une soupape tout ou rien à trois voies à commande hydraulique différentielle, ayant une entrée principale (12a) couplée audit circuit hydraulique entre la soupape hydraulique unidirectionnelle (10) et l'ensemble percolateur (1), des première et seconde entrées de commande (12b ; 12d, 12a) connectées entre la sortie de la pompe (3) et la soupape hydraulique unidirectionnelle (10) et, respectivement, entre la soupape hydraulique unidirectionnelle (10) et l'ensemble percolateur (1), et une sortie (12c) qui communique avec ledit milieu de refoulement (11) ;
l'agencement étant tel qu'après activation de la pompe (3) pour préparer la boisson, la soupape de refoulement (12) passe de l'état ouvert à l'état fermé avant que la soupape hydraulique unidirectionnelle (10) s'ouvre, et après désactivation de la pompe (3) une fois que la boisson a été distribuée, la soupape de refoulement (12) repasse à l'état ouvert.

2. Machine selon la revendication 1, dans laquelle ladite soupape hydraulique unidirectionnelle (10), et la soupape de refoulement (12) sont intégrées dans un seul ensemble soupape à trois voies (30) comportant
une entrée (30a) connectée de façon externe audit circuit hydraulique, entre la sortie de la pompe (3) et l'ensemble percolateur (1), et communiquant de façon interne avec l'entrée de la soupape hydraulique unidirectionnelle (10) ainsi qu'avec la première entrée de commande (12b) de la soupape de refoulement (12),
une entrée/sortie (30b) connectée de façon externe à l'ensemble percolateur (1), et communiquant de façon interne avec la sortie de la soupape hydraulique unidirectionnelle (10) et l'entrée principale (12a) de la soupape de refoulement (12), et
une sortie (30c) qui communique avec ledit milieu de refoulement (11).

3. Machine selon la revendication 1 ou la revendication 2, dans laquelle la soupape de refoulement (12) comprend un corps creux (13, 14) dans lequel sont prévues ladite entrée principale (12a ; 15, 16), la première entrée de commande (12b ; 17, 18) et la sortie (12c ; 20), et dans lequel est définie une chambre (22) qui communique avec l'entrée principale (12a ; 15, 16) et la première entrée de commande (12b ; 17, 18) et qui peut communiquer avec la sortie (12c ; 20) au travers d'un siège de soupape (21) ;
entre l'entrée de commande (12b ; 17, 18) et l'entrée principale (12a ; 15, 16) dans ladite chambre (22) étant monté mobile, d'une manière étanche aux liquides, un piston (23) portant un bouchon (24) apte à coopérer avec ledit siège de soupape (21) pour commander la communication entre l'entrée principale (12a ; 15, 16) et la sortie (12c ; 20) ; ledit piston (23) comportant des moyens élastiques associés (25) qui tendent à déplacer le bouchon (24) pour l'écarter dudit siège de soupape (21).

4. Machine selon les revendications 2 et 3, dans laquelle ladite soupape hydraulique unidirectionnelle (10) est intégrée à la soupape de refoulement (12).

5. Machine selon la revendication 4, dans laquelle dans ledit piston (23 ; 26, 27) est définie une cavité (26b) qui communique à demeure avec l'entrée principale (12a ; 15, 16) de la soupape de refoulement (12) et dans laquelle est défini un autre siège de soupape (29) au travers duquel ladite cavité (26b) peut communiquer avec l'entrée de commande (12b ; 17, 18) de la soupape de refoulement (12) ; dans ladite cavité (26b) étant monté mobile un autre bouchon (28) qui coopère avec ledit autre siège de soupape (29) pour commander la communication entre la première entrée de commande (12b) et l'entrée principale (12a) qui en service peut assurer la fonction desdites entrée/sortie (30b) et seconde entrée de commande (12d) ; ledit autre bouchon (28) étant associé à d'autres moyens élastiques (31) qui tendent à le maintenir en prise contre ledit autre siège de soupape (29).
